# FASCICULE DE BREVET EUROPEEN

(11) **EP 0 873 851 B1**
(45) Date de publication et mention de la délivrance du brevet: **05.11.2003**
(21) Numéro de dépôt: 98107086.5
(22) Date de dépôt: 17.04.1998
(51) Int. Cl.: B29D 30/06, B29C 33/48, B29C 33/50

(54) **Elément moulant un motif dans une bande de roulement**
Formwerkzeugteil zur Formgebung eines Musters auf einer Reifenlauffläche
Mould element for moulding a pattern on a tyre tread band

(30) Priorité: 24.04.1997 FR 9705194
(43) Date de publication de la demande: 28.10.1998
(73) Titulaire: Compagnie Générale des Etablissements MICHELIN-MICHELIN & CIE, 63040 Clermont-Ferrand Cedex 09 (FR)
(72) Inventeur: Lagnier, Alain, 63540 Romagnat (FR); Clarissoux, Antoine, 63100 Clermont-Ferrand (FR); Isnard, Roger, 63000 Clermont-Ferrand (FR)
(74) Mandataire: Diernaz, Christian

(56) Documents cités:
- FR-A- 1 406 950
- US-A- 2 732 589
- US-A- 3 432 888
- US-A- 3 642 416
- PATENT ABSTRACTS OF JAPAN vol. 013, no. 202 (M-824), 12 mai 1989 & JP 01 024709 A (NIPPON PLAST CO LTD), 26 janvier 1989,
- PATENT ABSTRACTS OF JAPAN vol. 017, no. 595 (M-1503), 29 octobre 1993 & JP 05 177697 A (KONAN TOKUSHU SANGYO KK), 20 juillet 1993,
- PATENT ABSTRACTS OF JAPAN vol. 096, no. 005, 31 mai 1996 & JP 08 025362 A (BRIDGESTONE CORP), 30 janvier 1996,

## Description

L'invention concerne des éléments moulants destinés à équiper des moules pour mouler des articles ou objets en caoutchouc et notamment des bandes de roulement pour pneumatiques. Elle concerne plus particulièrement des éléments moulants pour mouler des motifs de forme non démoulable.

Par motif non démoulable, on entend un motif comportant au moins une contre-dépouille dans sa forme; de sorte que, si l'élément moulant, utilisé pour le moulage dudit motif, est emprisonné dans une matière rigide alors il n'existe pas de coulissement possible entre l'élément et la matière l'enrobant puisque la partie en contre-dépouille s'oppose audit coulissement. Par rigide, on entend une matière qui ne permet pas une déformation élastique suffisante pour pouvoir démouler l'élément, contrairement à la matière élastomérique composant, par exemple, la bande de roulement d'un pneumatique. Dans ce dernier cas et bien que la matière à base de mélange de caoutchouc soit suffisamment souple pour se déformer élastiquement et permettre ainsi le démoulage de l'élément moulant non démoulable, il peut cependant apparaître des déformations importantes pouvant provoquer, au cours du démoulage, l'apparition de cassures dans la matière moulée. Ces déformations de la matière moulée sont d'autant plus importantes que chaque motif moulé est pourvu d'au moins une partie en contre-dépouille.

On constate que pour satisfaire à une augmentation de la performance des pneumatiques avec le temps, il existe une demande croissante de sculptures de pneumatique comportant des motifs ayant au moins une partie de motif en contre-dépouille.

Il est connu, par exemple par le brevet **FR 2 612 129,** que pour améliorer la durée de vie sur usure d'une bande de roulement munie d'éléments de relief de pourvoir ceux-ci d'une pluralité d'incisions présentant sur la surface de roulement de la bande de roulement des tracés rectilignes et en section droite des tracés en ligne brisée ou ondulée sur la profondeur.

En outre, et pour éviter l'apparition de fissures de fatigue en fond d'incision, il est connu, voir par exemple le brevet **US 2,121,955**, de pourvoir le fond des incisions d'une bande de roulement d'un pneumatique avec une partie élargie formant un canal de section appropriée (lequel canal peut jouer aussi un rôle dans l'évacuation de l'eau présente sur la surface sur laquelle roule le pneumatique). On emploie de manière usuelle pour réaliser une telle incision, un élément moulant en forme de lame métallique plus ou moins mince et comportant à une de ses extrémités un renflement destiné à mouler l'élargissement du motif en fond d'incision.

En vue de remédier à la déchéance de l'adhérence en cours de durée de vie d'un pneumatique, le brevet **EP 0 378 090** décrit une bande de roulement pourvue d'incisions présentant en section droite des tracés en forme de fourche à au moins deux branches, de façon à faire apparaître un plus grand nombre d'incisions après usure partielle de ladite bande. Pour réaliser de telles incisions, il est connu d'employer des lamelles rigides et non déformables, en général métalliques, et dont la géométrie de section droite est équivalente à celle qui est voulue pour l'incision. On conçoit aisément que pour certaines géométries de telles lamelles, il soit particulièrement difficile de les extraire de la bande de roulement après moulage, les branches de la lamelle devant forcer le passage en écartant les parois de la partie de l'incision débouchant à la surface de la bande de roulement.

En outre, dans le cas où un grand nombre d'éléments moulants non démoulables sont prévus à la surface d'un moule et de façon à être assez rapprochés les uns des autres, on observe que l'effort de démoulage devient très important; ce qui se traduit par une dépense accrue d'énergie et par une augmentation du risque d'arrachements de matière sur la bande moulée résultant de l'opération de démoulage.

L'objet de la présente invention est de proposer un élément moulant pour mouler un motif non démoulable dans une bande en matière élastomérique, ledit élément moulant ne présentant pas les inconvénients des éléments moulants usuellement employés.

En particulier, il est proposé un élément moulant non démoulable qui par son architecture permet un démoulage aisé tout en réduisant de manière sensible l'effort nécessaire pour réaliser ledit démoulage et en diminuant sensiblement le risque d'arrachement ou de cassures de la matière moulée. En vue de faciliter le démoulage d'une pièce comportant une contre-dépouille, les documents patent abstract of Japan n°01024709 et FR-A-1 406 950 montrent des moules équipés d'éléments moulant pivotant. Ces moules concernent toutefois le moulage de pièces "en forme" et non de motifs au coeur de la matière formant la bande de roulement d'un pneumatique.

L'élément moulant selon l'invention offre entre autre la possibilité de réaliser un motif dont la partie débouchant à la surface du pneumatique neuf est prolongée sous ladite surface par une partie occupant un volume très supérieur au volume de la partie débouchant.

La structure de l'élément moulant non démoulable proposée dans le cadre de l'invention permet en outre de réaliser des motifs dont les géométries sont telles que leur réalisation ne pouvait être envisagé raisonnablement par des procédés classiques employant dés éléments moulants usuels.

L'élément moulant conforme à l'invention est destiné à équiper un moule comportant une surface de moulage pour mouler une bande de roulement destinée notamment à un pneumatique neuf ou rechapé. Une autre application d'une telle bande est aussi l'équipement d'une chenille.

Cet élément moulant, une fois en place sur le moule, fait saillie à la surface de moulage dudit moule pour mouler un motif non démoulable, c'est à dire un motif dont une partie au moins est en contre-dépouille et par conséquent non démoulable suivant la direction de démoulage associée audit élément moulant. L'élément moulant comporte au moins une partie pour mouler une partie de motif en contre-dépouille.

L'élément moulant est caractérisé en ce que, pendant au moins une partie de l'opération de démoulage de l'élément moulant, chaque partie de l'élément moulant une partie de motif en contre-dépouille présente une surface projetée sur un plan perpendiculaire à la direction de démoulage inférieure à la surface projetée, sur le même plan, de la même partie dans la configuration de moulage.

Cette caractéristique facilite le démoulage sous un effort réduit comparé à celui qui est nécessaire pour démouler un élément moulant le même motif mais ne comportant pas ladite caractéristique, c'est à dire un élément rigide et indéformable géométriquement. En effet, dans le cas d'un élément moulant rigide et indéformable, seule la matière moulée peut et doit se déformer pour permettre l'extraction dudit élément moulant après moulage.

Pendant le démoulage, l'élément moulant conforme à l'invention est déplacé suivant la direction de démoulage et est soumis à une force de démoulage à laquelle s'oppose la matière moulée entourant ledit élément moulant compte tenu de la ou des parties en contre-dépouille; sur chaque partie de l'élément moulant formant une partie du motif en contre-dépouille, les efforts exercés par la matière moulée aboutissent à une réduction de l'encombrement de l'élément moulant par une diminution substantielle de la surface projetée, sur un plan perpendiculaire à la direction de démoulage, de la partie de l'élément moulant une partie de motif en contre-dépouille. Dans le même temps, la matière moulée de nature élastomérique et possédant des propriétés d'élasticité se déforme suffisamment pour permettre l'ouverture des parties des motifs débouchant à la surface de la bande de roulement et permettre ainsi l'extraction de l'élément moulant hors de ladite matière.

L'invention qui vient d'être exposée sera mieux comprise à l'aide des figures suivantes ayant trait à plusieurs variantes de réalisation présentées uniquement à titre d'exemples :
- la figure **1** représente un élément moulant selon l'invention comportant deux pièces réunies à l'aide d'un axe pour former une charnière;
- la figure **2** montre un autre élément moulant comportant trois pièces en forme de lamelles, deux pièces pouvant pivoter autour d'axes perpendiculaires à une troisième;
- la figure **3** représente une variante d'un élément moulant formé par l'assemblage de trois lamelles;
- la figure **4** montre un élément moulant une incision pourvue d'un pont de liaison entre les parois de ladite incision;
- la figure **5** montre un élément moulant composé de plusieurs pièces articulées entre elles pour mouler une incision se prolongeant par un canal;
- la figure **6** montre une autre variante d'élément moulant formé par un assemblage articulé de plusieurs pièces rigides pour mouler une incision en forme de Y;
- la figure **7** montre un élément moulant formé de deux pièces articulées entre elles, ledit élément moulant pouvant présenter deux configurations de moulage distinctes;
- la figure **8** montre une autre variante d'élément moulant pouvant présenter deux configurations de moulage distinctes;
- la figure **9** montre un élément moulant formé de trois pièces rigides articulées entre elles;
- la figure **10** représente un élément moulant comportant à sa partie inférieure une partie déformable élastiquement sous l'action des efforts de démoulage, ladite partie étant constituée d'une lame métallique mince retournée sur elle-même;
- la figure **11** montre un élément moulant une rainure se prolongeant vers l'intérieur de la bande moulée par une incision de forme ondulée;
- la figure **12** représente un élément moulant comportant une partie formant un bourrelet en matière déformable élastiquement, ledit élément moulant une incision se prolongeant par un canal en contre-dépouille;
- la figure **13** présente un élément moulant comportant une partie formant un tube déformable élastiquement pour mouler une partie de motif en contre-dépouille;
- la figure **14** montre une lamelle rigide à laquelle est associée un tube déformable sous l'action d'un fluide de remplissage.

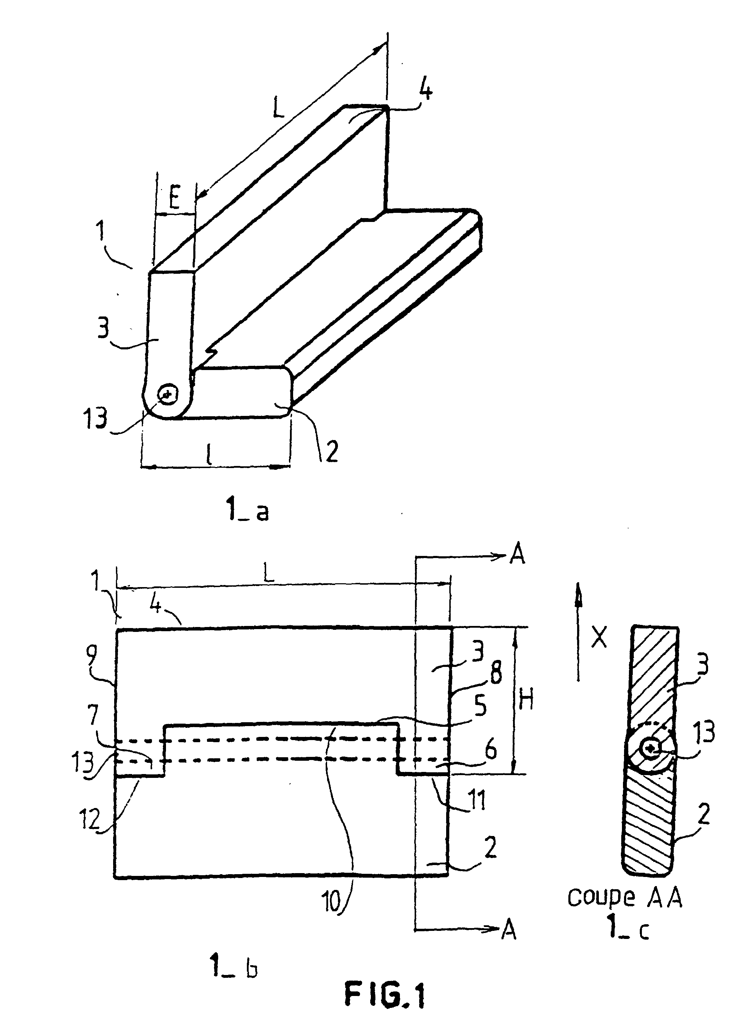

L'élément moulant **1** représenté sur la figure **1** est réalisé par la réunion de deux parties **2, 3** métalliques de géométrie plane de même épaisseur **E** et de même longueur **L;** chacune desdites parties possède une rigidité suffisante pour ne pas se déformer sous l'action des forces exercées par la matière caoutchoutique pendant le moulage. La partie **3**, de forme sensiblement rectangulaire et de largeur **H,** est destinée à être fixée par son bord supérieur **4** à la surface de moulage d'un moule, non représenté ici, tandis que son bord inférieur **5** est réalisé de manière à présenter deux oreilles **6** et **7** au voisinage des bords latéraux **8** et **9** de ladite partie **3**. De façon complémentaire, la partie **2** comporte un bord supérieur **10** ayant une géométrie adaptée pour pouvoir être réuni au bord inférieur **5** de la partie **3**; deux encoches **11** et **12** sont prévues sur ledit bord supérieur **10** de la partie **2** dans lesquelles les oreilles **6** et **7** de la partie **3** viennent se placer. L'assemblage de la partie **2** avec la partie **3** est réalisé par le passage d'un axe de pivot **13** de longueur sensiblement égale à la longueur **L** des parties **2** et **3** et traversant les deux oreilles **6** et **7** et la région de la partie **2** située entre lesdites deux oreilles. Cet assemblage constitue une charnière permettant à la partie **2** de tourner de manière à modifier son orientation par rapport. à la partie **3** de l'élément moulant, comme cela est montré aux figures **1-a** et **1-b** représentant respectivement l'élément moulant **1** dans la configuration de moulage (fig. **1-a**) et en cours de démoulage (fig. **1-b**).

La flèche **X,** perpendiculaire à la direction de l'axe **13** et parallèle à l'une des faces de la partie **3**, représente la direction de démoulage de l'élément moulant **1**. La figure **1-c** représente la coupe selon A-A réalisée sur l'élément moulant en position de démoulage de la figure **1-b**.

La partie **2** moulant la partie du motif en contre-dépouille fait, en position de moulage (figure **1-a**), un angle de 90° avec la partie **3** de manière à mouler une partie de motif en contre-dépouille présentant en coupe transversale une largeur **1** très supérieure à l'épaisseur **E** de l'élément moulant **1**. La surface projetée de la partie **2** moulant la partie du motif en contre-dépouille sur un plan perpendiculaire à la direction de démoulage **X** est égale dans le cas présent au produit **L**x**l**.

Au cours du démoulage (fig **1-b**), la partie **2** est soumise à des efforts de réaction du mélange de caoutchouc entourant ladite partie **2** et s'opposant audit démoulage; pendant le démoulage, la matière caoutchoutique se déforme et dans le même temps, la partie **2**, soumise à l'action des efforts de la partie du motif en contre-dépouille, tourne autour de l'axe **13** de façon à présenter en projection sur un plan perpendiculaire à la direction de démoulage **X** une surface inférieure à la surface **L**x**I**; dans le cas d'espèce, la surface finale est égale à **L**x**E**.

Outre l'avantage principal, relatif à la facilité de démoulage résultant de la structure décrite, l'élément moulant selon l'invention offre l'avantage de permettre le remplacement de la partie **2** ou de la partie **3** pour modifier partiellement la géométrie du motif moulé par ledit élément moulant.

Pour figer temporairement la géométrie de l'élément moulant, il peut être recherché un frottement minimum au niveau de chaque articulation de façon à ne permettre la rotation qu'à partir d'un seuil d'effort prédéterminé.

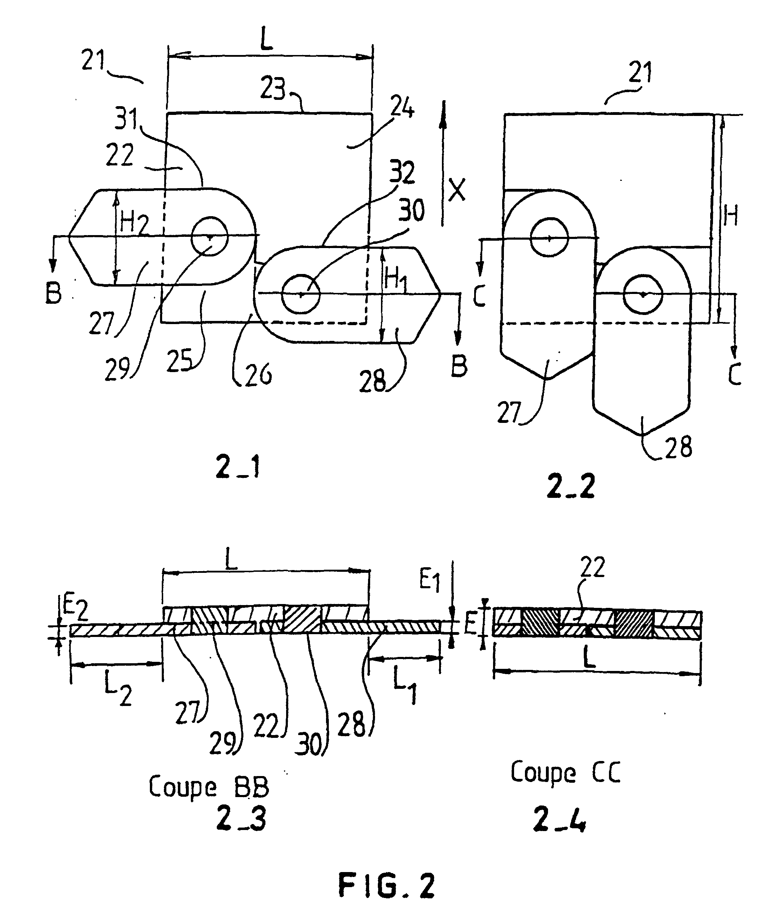

Sur la figure **2** est représenté une variante d'un élément moulant selon l'invention comportant deux pièces mobiles en rotation autour d'axes de pivot perpendiculaires à une troisième pièce, cette dernière pièce étant destinée à être fixée à un moule.

L'élément moulant **21** est constitué d'une première partie formée par une pièce plane et rigide **22** réalisée en métal; cette pièce se présente sous une forme rectangulaire de longueur **L** et de largeur **H** (correspondant à la profondeur du motif moulé par ledit élément moulant) et d'épaisseur **E**. L'élément moulant est destiné à être fixé par son bord supérieur **23** et grâce à des moyens appropriés à la surface de moulage d'une partie d'un moule moulant une bande de roulement en mélange de caoutchouc. La flèche X représente la direction et le sens de démoulage de l'élément moulant **21**; cette direction est parallèle à la face avant **24** dudit élément et est perpendiculaire au bord supérieur **23**.

L'élément moulant **21** comporte, de plus, deux parties **27, 28** moulant chacune une partie en contre-dépouille du même motif de sculpture.

Deux évidements ont été réalisés sur la face **24** et dans une partie de l'épaisseur de la pièce **22** pour servir partiellement de logements **25** et **26** aux deux parties métalliques **27** et **28** de forme allongée, chaque partie **27, 28** ayant la forme d'une plaque mince rigide d'épaisseur respectivement **E1** et **E2**, de longueur **L1** et **L2**. Ces pièces **27** et **28** sont montées dans les logements **25** et **26** de façon à être libres en rotation autour de deux axes de pivot **29** et **30** respectivement, lesdits axes étant perpendiculaires à la face **24** de la pièce **22**. De plus, les axes de montage des pièces **27** et **28** sont décalés dans une direction parallèle à la direction X.

En position de moulage, les pièces **27** et **28** viennent en butée contre les parois supérieures **31** et **32** des logements **25** et **26** de façon à pouvoir mouler un motif possédant deux parties en contre-dépouille, comme cela est visible sur la figure **2**-3 représentant la coupe selon B-B de l'élément moulant **21** montré à la figure **2**-1. **L1** et **L2** représentent les longueurs en contre-dépouille formées respectivement par les parties **28** et **27**.

Les orientations des parois **31** et **32** des logements **25** et **26** par rapport à la direction X fixent les angles des pièces **27** et **28** dans la position de moulage.

Dans cette configuration de moulage, la somme de toutes les surfaces hachurées visualisées sur la figure **2**-3 est égale à la surface de l'élément moulant projetée sur un plan perpendiculaire à la direction de démoulage X.

Pendant le démoulage, les pièces **27** et **28**, soumises aux efforts de réaction de la matière caoutchoutique, tournent autour des axes **29** et **30** de façon à présenter une surface projetée sur un plan perpendiculaire à la direction de démoulage X qui soit réduite pour permettre un démoulage plus facile (figure **2**-2).

Cette rotation est progressive et n'est rendue possible que par la déformation élastique de la matière moulée. La figure **2**-4 montre la coupe selon C-C de l'élément moulant **21** en position finale de démoulage montré sur la figure **2**-3; la somme des surfaces hachurées représente la surface réduite projetée de l'élément moulant.

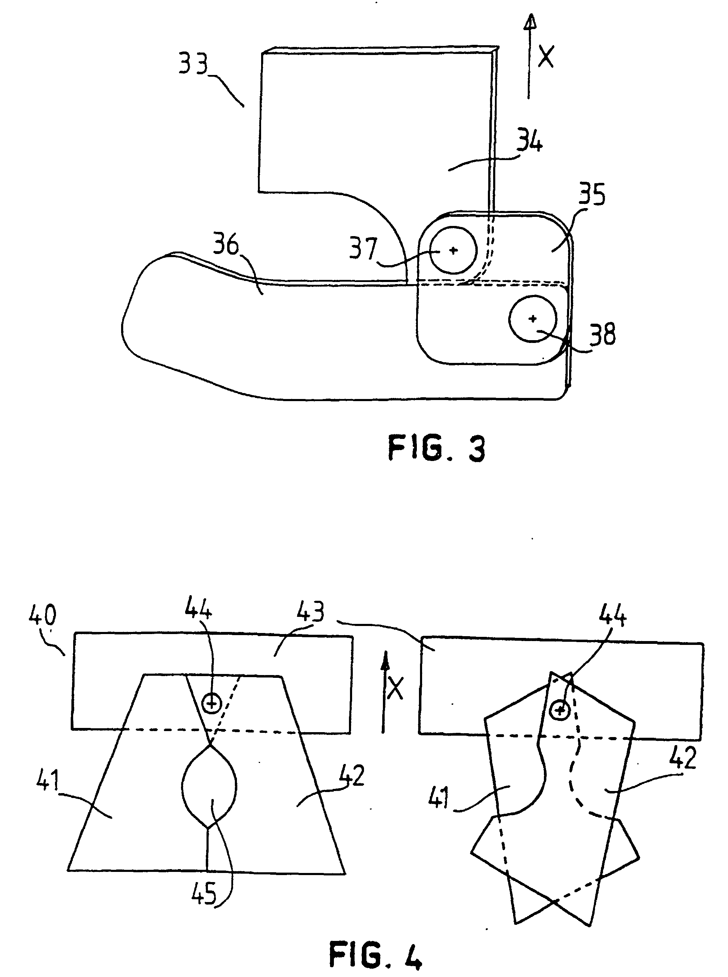

Sur la base du principe qui vient d'être décrit, la variante de la figure **3** concerne un le cas d'un élément moulant **33** constitué par l'assemblage de trois parties, chaque partie étant réalisée sous la forme d'une lamelle plane rigide **34, 35, 36** de géométrie sensiblement rectangulaire. Ces trois lamelles, disposées de manière à avoir leurs grandes faces parallèles, sont assemblées et articulées entre elles autour de deux axes de pivot **37** et **38** perpendiculaires auxdites grandes faces des lamelles.

Les lamelles **34** et **36** sont disposées l'une par rapport à l'autre de façon à être dans un même plan; la troisième lamelle **35** est placée sur les deux premières lamelles de manière à servir de pièce de liaison entre lesdites deux premières pièces. Les axes de pivot **37** et **38** traversent respectivement les lamelles **34, 35** et **35, 36**.

Dans la configuration de moulage représentée, la lamelle 36 est en butée contre la lamelle **34**, de manière à mouler dans la bande de roulement une incision ayant globalement le contour des lamelles ainsi assemblées; la partie de l'incision proche de la surface externe de ladite bande moulée par la lamelle **34** ayant une longueur inférieure à celle de la partie de l'incision moulée sous ladite surface par la lamelle **36**.

Comme représenté sur la figure **3**, en configuration de moulage et hormis la lamelle **34** destinée à être fixée à un moule, les deux autres lamelles **35** et **36** moulent des parties de motif en contre-dépouille.

Basé sur le principe de l'invention, les figures **4** à **9** représentent des variantes de réalisation d'éléments moulants comportant une ou plusieurs pièces mobiles en rotation sous l'action des forces de démoulage.

La variante d'élément moulant **40** représentée en coupe transversale à la figure **4** comporte deux parties métalliques **41** et **42** réunies autour d'un même axe de pivot **44** à une troisième partie **43**, cette dernière étant destinée à être liée à un moule. Les deux parties mobiles en rotation **41** et **42** sont conçues pour qu'en position de moulage, elles moulent des parties de motif en contre-dépouille et qu'en même temps elles délimitent un orifice **45** par lequel la matière élastomérique peut passer, pendant le moulage, pour former un pont de liaison entre les parois opposées du motif moulé. Le contour de cet orifice est dessiné de façon à contraindre, dans un premier temps, les parties mobiles en rotation **41** et **42** à pivoter autour de l'axe de pivot pour s'écarter l'une de l'autre en exploitant le caractère déformable de la partie moulée en contre-dépouille, puis une fois le pont de liaison démoulé, les deux parties mobiles **41** et **42** peuvent pivoter dans le sens opposé pour faciliter le démoulage final de l'élément moulant suivant la direction repérée par la flèche X.

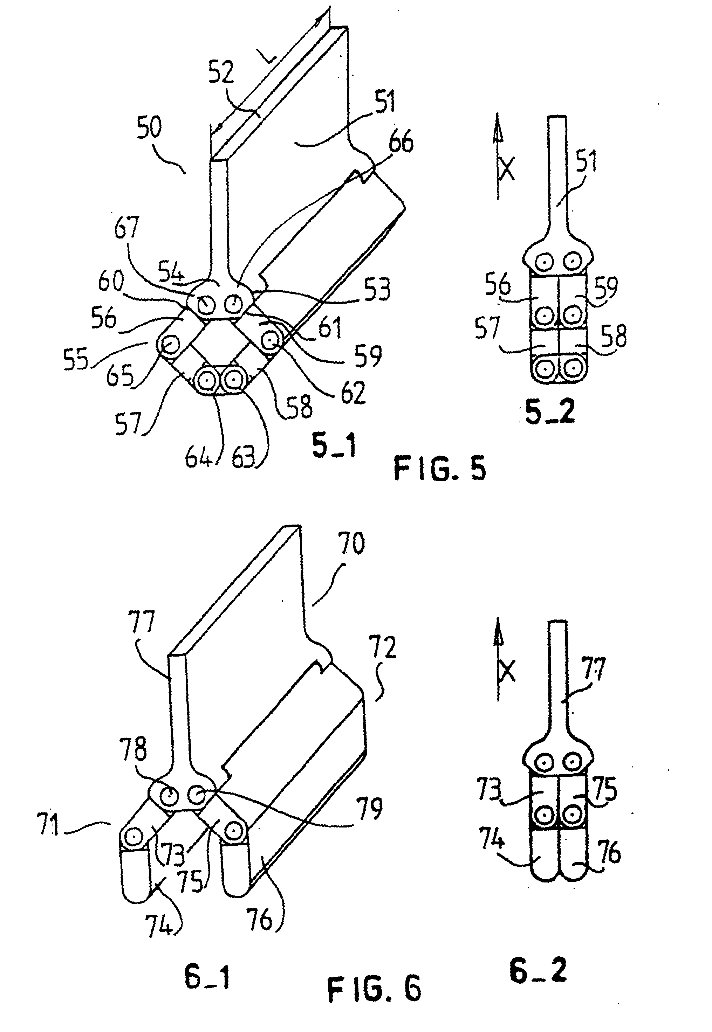

La figure **5-1** montre une vue en perspective d'un élément moulant **50** en position de moulage présentant une première partie **51** plane rigide en forme de T pour mouler une incision débouchant à la surface d'une bande de roulement, ladite première partie plane **51**, destinée à être fixée à un secteur de moule par son bord supérieur **52**, comporte sur son bord inférieur **53** un élargissement **54** s'étendant de part et d'autre du plan moyen de la première partie et sur toute la longueur **L** de ladite partie.

Une deuxième partie **55** liée au bord inférieur **53** de la première partie est destinée à mouler un canal à l'extrémité inférieure de l'incision moulée par ladite première partie. Cette deuxième partie **55** est constituée par quatre pièces **56, 57, 58, 59** planes rigides et de même longueur **L** que la première partie **51** et assemblées par leurs bords de manière à être articulées entre elles autour d'axes de pivot **62, 63, 64, 65**. Les pièces d'extrémité **56** et **59** sont montées articulées de part et d'autre de l'élargissement **54** de la première partie **51** de l'élément moulant autour de deux axes de pivot **66, 67**. Ledit élargissement **54** est pourvu de portées **60** et **61** coopérant avec les pièces d'extrémité **56** et **59** de la deuxième partie de l'élément moulant de façon à bloquer ladite deuxième partie dans la géométrie de moulage désirée.

La figure **5-2** montre une section droite d'extrémité de l'élément moulant de la figure **5-1** pendant le démoulage dudit élément moulant. La deuxième partie **55** de l'élément moulant se déforme à la manière d'un pantographe de manière présenter une surface projetée sur un plan perpendiculaire à la direction de démoulage X qui soit réduite par rapport à la surface projetée de la même partie en position de moulage, et cela pour faciliter le démoulage.

La figure **6-1** montre un exemple de réalisation d'une lamelle **70** moulant une incision dont la section droite forme un Y formée d'une partie médiane **77** destinée à être liée à un moule et de deux parties **71** et **72** formant chacune une branche du Y. Les parties **71** et **72** sont constituées respectivement de pièces rigides **73, 74,** et **75, 76** montées articulées entre elles autour d'axes de pivot, lesdites branches **71** et **72** étant assemblées sur la pièce médiane 77 au moyen d'axes de pivot **78, 79**. Il est, en outre, prévu au niveau de chaque articulation une butée d'arrêt sur chaque pièce coopérant avec la pièce montée articulée et permettant le blocage de la géométrie de la lamelle dans la configuration de moulage voulue sous l'action des efforts de moulage de la matière élastomérique composant la bande de roulement.

La figure **6-2** montre la même lamelle 70 dans une configuration repliée facilitant le démoulage.

Il peut être avantageusement réalisé une lamelle formée par l'assemblage de plusieurs lamelles du même type que celle représentée sur la figure 6, chaque partie 74, 76 articulée se prolongeant, par exemple, par au moins deux autres branches articulées.

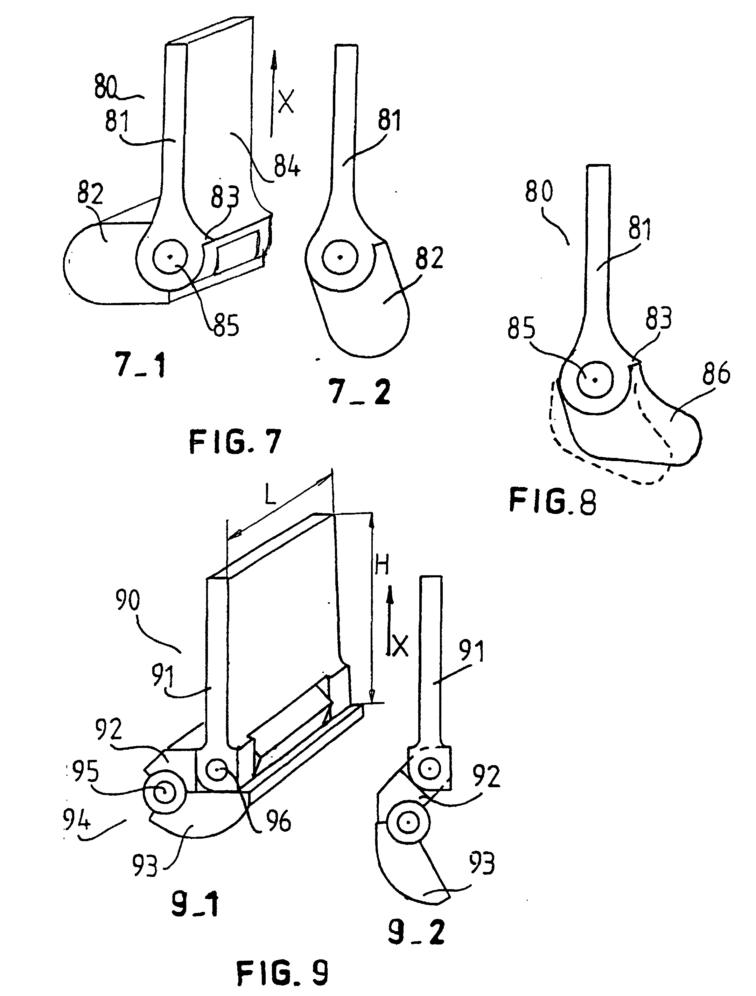

Les figures **7, 8, 9** montrent des variantes d'éléments moulants comportant au moins deux pièces articulées entre elles et présentant au moins deux configurations stables de moulage, chaque configuration de moulage moulant une partie de motif en contre-dépouille. Par configuration stable de moulage, on entend qu'il existe une géométrie d'équilibre de l'élément moulant dans laquelle, lorsqu'il est soumis au efforts de moulage exercés par la matière caoutchoutique, ledit élément conserve sa géométrie.

Sur les figures **7** et **8** sont représentées deux autres variantes d'un élément moulant **80** selon l'invention comportant une première partie identique **81** se prolongeant par une deuxième partie moulant une partie de motif en contre-dépouille, ladite deuxième partie étant montée articulée sur la première partie **81** autour d'un axe de pivot **85** et pouvant adopter selon le choix de l'utilisateur une première configuration de moulage ou bien une seconde configuration de moulage différente de la première.

Sur la figure **7-1,** on voit l'élément moulant **80** dans une première configuration possible de moulage : la deuxième partie **82** moulant une partie de motif en contre-dépouille est sensiblement perpendiculaire à l'une des faces **84** de la première partie **81** et peut tourner autour de l'axe de pivot **85**. Dans une deuxième configuration de moulage possible, représentée à la figure **7-2,** la deuxième partie **82** vient en butée sur une nervure **83** prévue sur l'autre face de la première partie **81** de façon à faire un angle différent de **90°** avec ladite face. Un tel élément moulant permet ainsi de mouler, au choix de l'utilisateur, deux géométries distinctes de motif.

Sur l'élément moulant de la figure **8**, il a été procédé au remplacement de la deuxième partie **82** de l'élément moulant représenté à la figure **7** par une nouvelle pièce **86** permettant le moulage d'une nouvelle géométrie de motif en contre-dépouille (en pointillés est représentée la forme réduite en fin de démoulage).

Bien entendu ce qui vient d'être décrit s'applique à toute autre forme d'éléments moulants constitués d'au moins deux parties (non nécessairement de forme plane), dès lors qu'il est possible de réaliser un assemblage mécanique desdites parties pour former l'élément moulant et permettant le pivotement de chaque partie d'élément moulant une partie de motif en contre-dépouille pour faciliter le démoulage.

La figure **9-1** montre la vue en perspective d'un élément moulant **90** comportant deux parties : une première partie **91** est destinée à être fixée à un moule et à faire saillie à la surface de moulage dudit moule et une deuxième partie **94** moulant une partie de motif en contre-dépouille assemblée à la première partie **91** par l'axe de pivot **96,** ladite deuxième partie étant formée par deux pièces **92**, **93** rigides articulées entre elles autour d'un pivot **95**. Cet élément moulant permet de mouler une incision de longueur **L** et de profondeur **H** (correspondant aux dimensions de la pièce **91**), ladite incision se prolongeant à sa base par un canal moulé par la deuxième partie **94** en contre-dépouille. Cet élément moulant **90** présente également la possibilité de mouler plusieurs formes différentes de motif en contre-dépouille. La figure **9-2** représente le même élément en cours de démoulage.

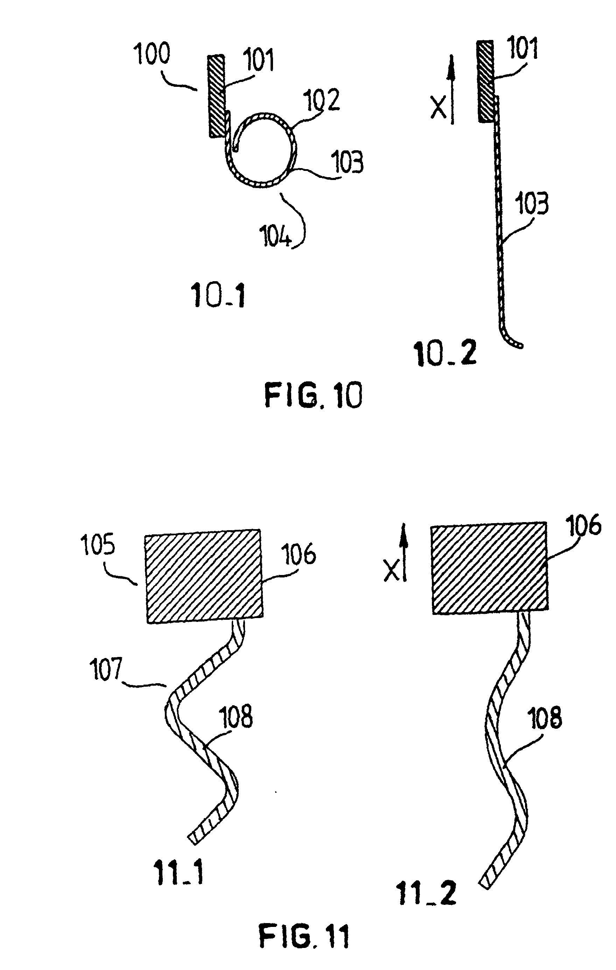

D'autres variantes d'éléments moulants conformes à l'invention sont maintenant décrits à l'aide des figures **11** à **14**.

De manière avantageuse, il est réalisé un élément moulant dont au moins une partie destinée à mouler une partie de motif en contre-dépouille est déformable élastiquement sous l'action des efforts de démoulage. Par déformable élastiquement, on entend que la géométrie de la partie correspondante de l'élément peut être modifiée d'une manière plus ou moins importante sous l'action d'efforts agissant sur ladite partie et qu'il peut retrouver une géométrie proche de la géométrie initiale dès lors que les efforts sont annulés. La déformation de la géométrie d'un tel élément moulant est de toute façon beaucoup plus importante que celle obtenue par le seul jeu des allongements et compressions du ou des matériau(x) composant ledit élément moulant.

La figure **10** montre la section droite d'un élément moulant **100** en position de moulage pour mouler une incision dans une bande de roulement, ledit élément moulant **100** comportant une première partie **101** destinée à être fixée à un moule et une deuxième partie **102** dans le prolongement de la première pour mouler une partie de motif en contre-dépouille. A la pièce métallique constituant la première partie **101** de l'élément moulant **100** et ayant la forme d'une plaque mince rigide est fixée, par exemple par soudage, la deuxième partie **102**. Cette deuxième partie **102** est constituée par une lame **103** mince métallique retournée sur elle-même de façon à former en section transversale une boucle **104** quasiment fermée sur elle-même. La lame mince peut aussi être réalisée dans un matériau à base de polymère de silicone ou tout autre matériau présentant des caractéristiques appropriées.

La figure **10-1** montre l'élément moulant **100** dans sa forme pendant le moulage du motif, tandis que la figure **10-2** montre le même élément soumis aux efforts de démoulage. La matière élastomérique entourant la partie **102** de l'élément formant la boucle contraint ladite partie **102** à se dérouler et à passer par la partie du motif moulée par la première partie **100** de l'élément moulant. Après démoulage complet, et compte tenu de l'élasticité de rappel de la lame mince, celle-ci reprend naturellement sa forme repliée prête à servir à un nouveau moulage.

On peut de manière avantageuse prévoir au moins un orifice dans la lame mince élastique pour permettre le passage de la matière moulée pendant le moulage de façon à remplir la cavité interne formée par la boucle. Pendant le démoulage de l'élément moulant la lame coupe les ponts de gomme formés à l'endroit de chaque orifice et on obtient une incision se prolongeant par un canal rempli de gomme; ce canal se transforme en rainure à la surface de roulement après une usure partielle de la bande de roulement.

La figure **11-1** montre, dans la configuration de moulage, un élément moulant **105** comportant une première partie **106** pour mouler une rainure sur la surface d'une bande de roulement, ladite première partie **106** se prolongeant par une seconde partie **107** réalisée sous la forme d'une lamelle **108** déformable élastiquement et dont la section droite présente plusieurs ondulations pour mouler une incision débouchant au fond de la rainure, ladite incision ayant une largeur très faible devant la largeur de la rainure. La figure **11-2** montre le même élément moulant **105** pendant le démoulage : sous l'action des efforts exercés par la matière élastomérique, la lamelle **108** est déformée de façon à présenter une amplitude des ondulations de sa section droite très sensiblement réduite par rapport à l'amplitude des ondulations pendant le moulage.

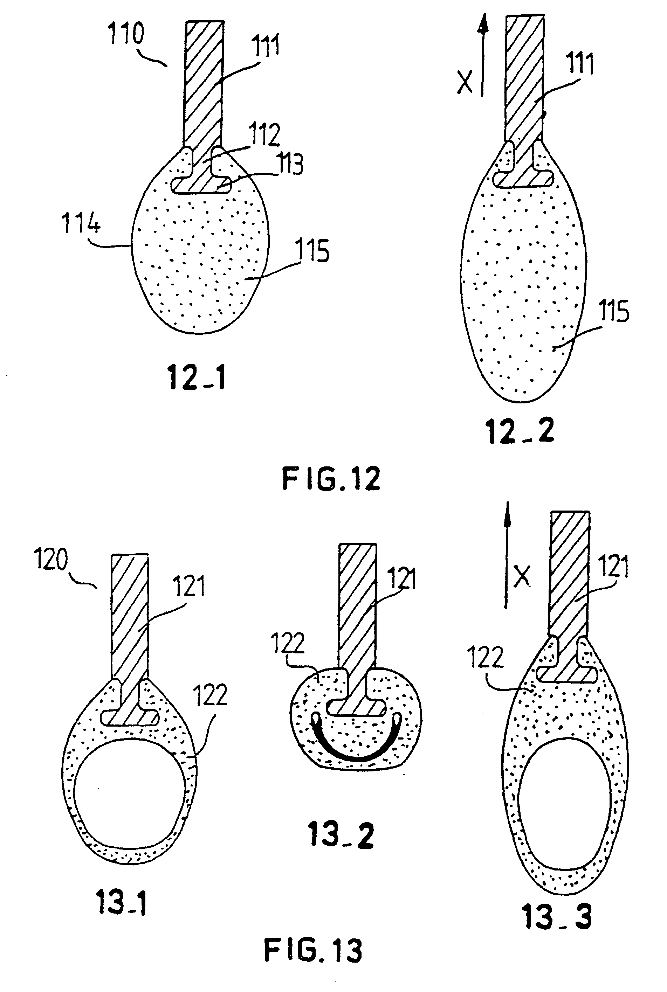

La figure **12** présente, vu en coupe transversale, une autre variante particulièrement intéressante d'un élément moulant **110** présentant la caractéristique selon laquelle la partie de l'élément moulant la partie de motif en contre-dépouille est déformable de façon à ce, que pendant le démoulage, la surface d'appui de ladite partie sur la matière moulée soit réduite sous l'action de la matière élastomérique entourant ledit élément moulant. Une première partie rigide **111** comporte le long de l'un de ses bords une partie amincie **112** se prolongeant par une deuxième partie **113** sensiblement plus large que l'épaisseur moyenne de la première partie **111**.

Une deuxième partie **114** réalisée, par exemple en matériau polymère de silicone, est moulée de façon à former un bourrelet **115** de section transversale sensiblement circulaire à l'état non contraint; ce bourrelet **115** est fixé de manière permanente à la première partie **111** de l'élément moulant en enrobant toute la partie amincie **112** et la partie élargie **113** (des trous peuvent être prévus dans la partie amincie pour améliorer l'ancrage de la deuxième partie sur la première). Les formes retenues de la partie amincie **112** et de la partie élargie **113** coopèrent avec le bourrelet **115** pour conférer à l'élément moulant une bonne résistance à l'arrachement dudit bourrelet **115** pendant le démoulage.

Le bourrelet **115**, destiné à mouler une partie de motif en contre-dépouille formant un canal de part et d'autre de l'extrémité d'une incision, est plein et réalisé dans un matériau déformable élastiquement. La figure **12-1** montre la section droite d'un tel élément en position de moulage, tandis que la figure **12-2** montre le même élément moulant en cours de démoulage.

Une autre variante avantageuse consiste à réaliser un élément comportant, à une extrémité inférieure d'une première partie rigide,-une deuxième partie, reliée à la première de manière permanente et formant un tube comme cela est visualisé sur la figure **13** qui représente une section droite d'un tel élément.

Pour réaliser la lamelle représentée à la figure **13-1**, on utilise une lamelle **121** semblable à la lamelle **111** montrée à la figure **12**, dans laquelle on remplace la partie déformable d'extrémité par une partie déformable formant un tube **122** en élastomère de silicone par exemple, choisi pour ses qualités de bonne résistance à la température et de bonne tenue mécanique à des moulages répétés.

La figure **13-2** est une vue en coupe transversale de l'élément moulant **120** dans une configuration de moulage, le tube **122** se referme sur lui-même de façon à mouler un canal à l'extrémité d'une incision; en cours de démoulage (figure **13-3**), et sous l'action de la matière élastomérique voisine, la section du tube se modifie et devient sensiblement ovale. Ainsi, la projection du tube moulant la partie du motif en contre-dépouille sur un plan perpendiculaire à la direction de démoulage X occupe une surface réduite comparée à la même projection du même tube en position de moulage.

De manière avantageuse, il est possible d'introduire dans le tube, avant moulage d'un motif dans une bande de roulement, un matériau dont le module d'élasticité est au plus égal à 50 % du module du matériau composant le tube de façon à éviter la fermeture du tube et à ajuster au plus près la forme désirée pour le moulage sans pour autant empêcher l'ovalisation dudit tube pendant le démoulage.

Avantageusement, il peut être prévu un dispositif d'amenée d'un fluide de remplissage, éventuellement sous pression, pour remplir le tube qui vient d'être décrit. De cette façon, il est possible d'obtenir une autre configuration de moulage de l'élément moulant (voir figure **13-1**). En outre, des moyens de vidange du fluide peuvent être prévus pour chasser partiellement ou en totalité le fluide de remplissage pour permettre au tube de se vider et ainsi faciliter le démoulage. En général, de tels moyens ne devraient pas être indispensables compte tenu du fait que pendant le démoulage la matière entourant le tube exerce des efforts sur ledit tube forçant le fluide à quitter ledit tube.

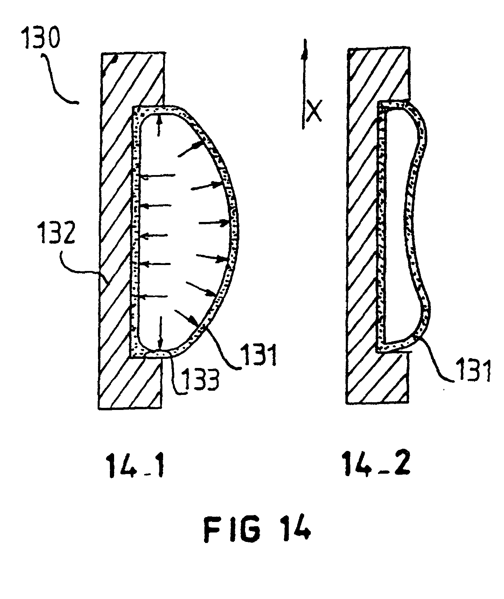

Une variante d'un élément moulant **130** comportant une partie formant un tube déformable sous l'action d'un fluide sous pression est représentée à la figure **14**. Dans cette variante, la partie de l'élément moulant la partie de motif en contre-dépouille forme un tube allongé **131** fixé, par exemple par collage, sur une des faces d'une lamelle rigide **132** (non nécessairement plane). Un logement **133** est prévu dans la première partie de l'élément moulant pour recevoir le tube **131** au moins partiellement pendant l'opération de démoulage.

Des moyens, non représentés ici, sont prévus pour amener un fluide de remplissage jusqu'au tube de façon à pouvoir le remplir et éventuellement le mettre sous pression pendant le moulage. En outre, il peut être prévu d'apporter, par le fluide de remplissage, des calories servant à la polymérisation du matériau élastomérique composant la bande de roulement.

En configuration de moulage (figure **14-1** ), le tube **131** est rempli d'un fluide (gaz ou liquide) pour mouler une partie de motif en contre-dépouille; à noter que le remplissage du tube peut avoir lieu avant moulage ou pendant le moulage (c'est à dire, quand la gomme a déjà entouré l'élément moulant). Pour effectuer le démoulage de l'élément moulant, le tube est vidé et peut reprendre sa forme initiale (voir figure **14-2**).

Le tube **131** peut être avantageusement réalisé en polymère silicone.

Pour obtenir une bonne performance dans le temps, il est judicieux de renforcer le tube par un matériau de renfort comme par exemple un mat à base de fibres de verre ou par des fils/câbles métalliques ou textile. Cette disposition présente, de plus, l'avantage de stabiliser dans le temps la géométrie adoptée par le tube sous l'action des forces de pression du fluide de remplissage : on moule ainsi des motifs dont les géométries sont semblables et répétitives.

On peut bien entendu combiner dans un même élément moulant différentes caractéristiques décrites avant, par exemple en combinant à la fois des parties d'élément moulant montées articulées et des parties déformables comme des tubes.

Par exemple, l'élément moulant représenté à la figure 5 peut, en outre, comporter un tube, pouvant être rempli avec un fluide approprié, ledit tube occupant l'espace délimité par les pièces **56, 57, 58, 59** afin de stabiliser la géométrie de l'élément moulant et/ou d'apporter des calories pour la vulcanisation de la matière composant la bande de roulement pendant le moulage.

L'invention concerne également un moule pour mouler une bande de roulement, ledit moule étant formé de plusieurs parties, une partie au moins comportant au moins un élément moulant faisant saillie à la surface de moulage de ladite partie de moule pour mouler un motif dans la bande, ledit élément moulant étant caractérisé en ce que une partie au moins dudit élément moulant est montée pivotante sur le moule autour d'un axe de pivot parallèle à la surface de moulage pour permettre une rotation de ladite partie de l'élément moulant pendant le démoulage et en ce que ledit élément moulant comporte au moins une configuration stable de moulage.

Une partie de moule selon l'invention peut comporter sur sa surface de moulage des moyens de fixation appropriés pour fixer de manière articulée, c'est à dire pour permettre des mouvements de rotation, des lamelles toutes inclinées d'un même angle différent de 90° avec la surface de moulage dudit moule. Cette disposition facilite le démoulage de l'élément de moule, suivant une direction de démoulage qui n'est pas la direction des lamelles, car il est possible auxdites lamelles de changer d'orientation par rapport au moule pendant cette phase de démoulage.

## Revendications

1. Elément moulant (**1, 21, 33, 40, 50, 70, 80, 90, 100, 105, 110, 120, 130**) destiné à équiper un moule pour mouler une bande de roulement en mélange de caoutchouc, ledit élément moulant dans l'épaisseur de ladite bande un motif non démoulable et comportant au moins une partie (**2, 27, 28, 35, 36, 41, 42, 55, 71, 72, 82, 94, 102, 107, 114, 122, 131**) pour mouler une partie de motif en contre-dépouille, ledit élément moulant possédant une direction de démoulage, l'élément moulant (**1, 21, 33, 40, 50, 70, 80, 90, 100, 105, 110, 120, 130**) étant **caractérisé en ce que**, pendant au moins une partie de l'opération de démoulage, la surface projetée de chaque partie (**2, 27, 28, 35, 36, 41, 42, 55, 71, 72, 82, 94, 102, 107, 114, 122, 131**) moulant un motif en contre-dépouille sur un plan perpendiculaire à la direction de démoulage est inférieure à la surface projetée de la même partie en position de moulage sur le même plan, de façon à faciliter le démoulage dudit élément moulant.

2. Elément moulant (**1, 21, 33, 40, 50, 70, 80, 90**) selon la revendication **1 caractérisé en ce qu'**il comporte au moins deux parties [(**2, 3**), (**22, 27, 28**), (**34, 35, 36**), (**41, 42, 43**), (**51, 55), (71, 72, 77), (81, 82), (91, 92)]**, l'une desdites parties étant destinée à mouler une partie du motif en contre-dépouille, les deux parties [(**2, 3**), (**22, 27, 28**), (**34, 35, 36**), (**41, 42, 43**), (**51, 55**), (**71, 72, 77**), (**81, 82**), (**91, 92**)], étant assemblées entre elles au moyen d'au moins un axe de pivot (**13, 29, 30, 37, 38, 44, 66, 67, 78, 79, 85, 93**), ledit (lesdits) axe(s) de pivot autorisant une rotation d'une partie par rapport l'autre sous l'action des efforts de démoulage pour permettre une diminution de la surface projetée sur un plan perpendiculaire à la direction de démoulage de chaque partie (**2, 27, 28, 35, 36, 41, 42, 55, 71, 72, 82, 94**) moulant une partie du motif en contre-dépouille.

3. Elément moulant (**80, 90**) selon la revendication **1** ou la revendication **2 caractérisé en ce que** ledit élément moulant comporte au moins deux configurations stables de moulage moulant chacune un motif présentant au moins une partie de motif en contre-dépouille, l'une quelconque desdites configurations pouvant être choisie avant le moulage dudit motif.

4. Elément moulant (**100, 105, 110, 120, 130**) selon la revendication **1 caractérisé en ce que** au moins une partie (**102, 107, 114, 122, 131**) dudit élément destinée à mouler une partie de motif en contre-dépouille est déformable élastiquement sous l'action des efforts de démoulage.

5. Elément moulant (**100**) selon la revendication **4 caractérisé en ce que** la partie destinée à mouler une partie de motif en contre-dépouille est une lame mince élastique (**103**) repliée sur elle-même de façon à former, vue en coupe transversale, une boucle (**104**).

6. Elément moulant (**120, 130**) selon la revendication **4 caractérisé en ce que** la partie destinée à mouler une partie de motif en contre-dépouille est agencée pour former un tube (**122, 131**).

7. Elément moulant (**120, 130**) selon la revendication **6 caractérisé en ce que** le tube (**122, 131**) moulant une partie de motif en contre-dépouille est rempli d'un matériau différent du matériau composant ledit tube, ledit matériau de remplissage présentant un module d'élasticité au plus égal à **50** % du module du matériau composant le tube.

8. Elément moulant (**120, 130**) selon la revendication **6 caractérisé en ce que** le tube (**122, 131**) moulant une partie de motif en contre-dépouille est raccordé à un dispositif d'amenée d'un fluide de remplissage sous pression, des moyens de vidange pouvant être prévus pour permettre le démoulage le fluide étant chassé hors du tube par les efforts de pression exercés par la matière élastomérique moulée.

9. Elément moulant (**120, 130**) selon l'une quelconque des revendications **6** à **8 caractérisé en ce que** le tube (**122, 131**) moulant une partie de motif en contre-dépouille est renforcé par un matériau de renforcement pour limiter la déformation résultant de l'allongement de la matière composant le tube.

10. Partie d'un moule présentant une surface de moulage pour mouler une partie d'une bande de roulement, ladite partie de moule comportant au moins un élément moulant faisant saillie à la surface de moulage du moule pour mouler un motif dans l'épaisseur de la bande, ledit élément moulant étant **caractérisé en ce que** une partie au moins dudit élément moulant est montée pivotante sur ladite partie de moule autour d'un axe de pivot parallèle à la surface de moulage dans la position de moulage pour permettre une rotation de ladite partie de l'élément moulant pendant le démoulage et **en ce que** ledit élément moulant comporte au moins une configuration de moulage.

11. Partie d'un moule présentant une surface de moulage pour mouler une partie d'une bande de roulement, ladite partie de moule comportant au moins un élément moulant selon l'une quelconque des revendications 1 à 9, cet élément moulant faisant saillie à la surface de moulage du moule pour mouler un motif dans l'épaisseur de la bande.

## Patentansprüche

1. Formelement (1, 21, 33, 40, 50, 70, 80, 90, 100, 105, 110, 120, 130), das dazu bestimmt ist, ein Formwerkzeug zum Abformen einer Lauffläche mit Gummimischung auszustatten, wobei das genannte Element in der Dicke der genannten Lauffläche ein nicht ausformbares Muster abformt und mindestens einen Teil (2, 27, 28, 35, 36, 41, 42, 55, 71, 72, 82, 94, 102, 107, 114, 122, 131) zum Abformen eines hinterschnittenen Teils des Musters aufweist, wobei das genannte Formelement eine Ausformrichtung besitzt, und wobei das Formelement (1, 21, 33, 40, 50, 70, 80, 90, 100, 105, 110, 120, 130) **dadurch gekennzeichnet ist, daß** während mindestens eines Teils des Ausformvorganges die Oberfläche, die von jedem Teil (2, 27, 28, 35, 36, 41, 42, 55, 71, 72, 82, 94, 102, 107, 114, 122, 131), das ein hinterschnittenes Muster abformt, auf eine Ebene senkrecht zur Ausformrichtung projiziert wird, kleiner ist als die Oberfläche, die vom selben Teil in der Abformlage auf die selbe Ebene projiziert wird, um auf diese Weise das Ausformen des genannten Formelements zu erleichtern.

2. Formelement (1, 21, 33, 40, 50, 70, 80, 90) nach Anspruch 1, **dadurch gekennzeichnet, daß** es mindestens zwei Teile [(2, 3), (22, 27, 28), (34, 35, 36), (41, 42, 43), (51, 55), (71, 72, 77), (81, 82), (91, 92)] aufweist, wobei das eine der genannten Teile dazu bestimmt ist, einen hinterschnittenen Teil des Musters abzuformen, die beiden Teile [(2, 3), (22, 27, 28), (34, 35, 36), (41, 42, 43), (51, 55), (71, 72, 77), (81, 82), (91, 92)] miteinander mittels mindestens einer Schwenkachse (13, 29, 30, 37, 38, 44, 66, 67, 78, 79, 85, 93) zusammengebaut sind, und die genannte(n) Schwenkachse(n) unter Einwirkung der Ausformkräfte eine Drehung eines Teils bezüglich des anderen veranlaßt, um eine Verkleinerung der Oberfläche zu gestatten, die auf eine Ebene senkrecht zur Ausformrichtung eines jeden Teils (2, 27, 28, 35, 36, 41, 42, 55, 71, 72, 82, 94) projiziert wird, das einen hinterschnittenen Teil des Musters abformt.

3. Formelement (80, 90) nach Anspruch 1 oder Anspruch 2, **dadurch gekennzeichnet, daß** das genannte Formelement mindestens zwei stabile Ausformausbildungen aufweist, von denen jede ein Muster abformt, das mindestens einen hinterschnittenen Musterteil aufweist, wobei eine beliebige der genannten Ausbildungen vor dem Abformen des genannten Musters ausgewählt werden kann.

4. Formelement (100, 105, 110, 120, 130) nach Anspruch 1, **dadurch gekennzeichnet, daß** mindestens ein Teil (102, 107, 114, 122, 131) des genannten Elementes, der dazu bestimmt ist, einen hinterschnittenen Teil des Musters abzuformen, elastisch unter Wirkung der Ausformkräfte verformbar ist.

5. Formelement (100) nach Anspruch 4, **dadurch gekennzeichnet, daß** der Teil, der dazu bestimmt ist, einen hinterschnittenen Teil des Musters abzuformen, ein dünner, elastischer Streifen (103) ist, der derart auf sich selbst umgebogen ist, daß er, im Querschnitt gesehen, einen Ring (104) bildet.

6. Formelement (120, 130) nach Anspruch 4, **dadurch gekennzeichnet, daß** der Teil, der dazu bestimmt ist, einen hinterschnittenen Teil des Musters abzuformen, dazu ausgebildet ist, ein Rohr (122, 131) zu bilden.

7. Formelement (120, 130) nach Anspruch 6, **dadurch gekennzeichnet, daß** das Rohr (122, 131), das einen hinterschnittenen Teil des Musters abformt, mit einem Material gefüllt ist, das sich von dem Material unterscheidet, das das genannte Rohr zusammensetzt, wobei das genannte Füllmaterial einen Elastitzitätsmodul aufweist, der höchstens 50 % des Moduls des Materials beträgt, das das Rohr zusammensetzt.

8. Formelement (120, 130) nach Anspruch 6, **dadurch gekennzeichnet, daß** das Rohr (122, 131), das einen hinterschnittenen Teil des Musters abformt, an eine Vorrichtung zur Zufuhr eines Strömungsmittels zum Füllen unter Druck angeschlossen ist, wobei Entleerungsmittel vorgesehen sein können, um das Ausformen zu gestatten, und wobei das Strömungsmittel aus dem Rohr durch Druckkräfte herausgedrückt wird, die durch das abgeformte Elastomermaterial ausgeübt werden.

9. Formelement (120, 130) nach irgendeinem der Ansprüche 6 bis 8, **dadurch gekennzeichnet, daß** das Rohr (122, 131), das einen hinterschnittenen Teil des Musters abformt, durch ein Verstärkungsmaterial verstärkt ist, um die Verformung zu begrenzen, die sich aus der Dehnung des Materials ergibt, das das Rohr zusammensetzt.

10. Teil eines Formwerkzeuges, mit einer Abformoberfläche, um einen Teil einer Lauffläche abzuformen, wobei der genannte Teil des Formwerkzeuges mindestens ein Formelement aufweist, das von der Abformoberfläche des Formwerkzeugs absteht, um ein Muster in der Dicke der Lauffläche abzuformen, und wobei das genannte Formelement **dadurch gekennzeichnet ist, daß** mindestens ein Teil des genannten Formelements um eine Schwenkachse, die in der Abformlage parallel zur Abformoberfläche ist, schwenkbar an dem genannten Teil des Formwerkzeugs angebracht ist, um eine Drehung des genannten Teils des Formwerkzeugs beim Ausformen zu gestatten, und daß das genannte Formelement mindestens eine Abformausbildung aufweist.

11. Teil eines Formwerkzeuges, mit einer Abformoberfläche, um einen Teil einer Lauffläche abzuformen, wobei der genannte Teil des Formwerkzeuges mindestens ein Formelement nach irgendeinem der Ansprüche 1 bis 9 aufweist, wobei dieses Formelement an der Abformoberfläche des Formwerkzeuges vorspringt, um ein Muster in der Dicke der Lauffläche abzuformen.

## Claims

1. A moulding element (1, 21, 33, 40, 50, 70, 80, 90, 100, 105, 110, 120, 130) intended to equip a mould for moulding a tread made of rubber mix, said element moulding a non-demouldable motif in the thickness of said tread and comprising at least one part (2, 27, 28, 35, 36, 41, 42, 55, 71, 72, 82, 94, 102, 107, 114, 122, 131) for moulding an undercut motif part, said moulding element having a demoulding direction, the moulding element (1, 21, 33, 40, 50, 70, 80, 90, 100, 105, 110, 120, 130) being **characterised in that**, during at least part of the demoulding operation, the projected surface of each part (2, 27, 28, 35 , 36, 41, 42, 55, 71, 72, 82, 94, 102, 107, 114, 122, 131) moulding an undercut motif on a plane perpendicular to the demoulding direction is less than the projected surface of the same part in the moulding position on the same plane, so as to facilitate demoulding of said moulding element.

2. A moulding element (1, 21, 33, 40, 50, 70, 80, 90) according to Claim 1, **characterised in that** it comprises at least two parts [(2, 3), (22, 27, 28), (34, 35, 36), (41, 42, 43), (51, 55), (71, 72, 77), (81, 82), (91, 92)], one of said parts being intended to mould part of the undercut motif, the two parts [(2, 3), (22, 27, 28), (34, 35, 36), (41, 42, 43), (51, 55), (71, 72, 77), (81, 82), (91, 92)] being assembled together by means of at least one pivot pin (13, 29, 30, 37, 38, 44, 66, 67, 78, 79, 85, 93), said pivot pin(s) permitting rotation of one part relative to the other under the action of the demoulding forces to permit a reduction in the projected surface on a plane perpendicular to the demoulding direction of each part (2, 27, 28, 35, 36, 41, 42, 55, 71, 72, 82, 94) moulding part of the undercut motif.

3. A moulding element (80, 90) according to Claim 1 or Claim 2, **characterised in that** said moulding element comprises at least two stable moulding configurations each moulding a motif having at least one undercut motif part, any one of said configurations possibly being selected before moulding said motif.

4. A moulding element (100, 105, 110, 120,130) according to Claim 1, **characterised in that** at least one part (102, 107, 114, 122, 131) of said element intended for moulding an undercut motif part is elastically deformable under the action of the demoulding forces.

5. A moulding element (100) according to Claim 4, **characterised in that** the part intended for moulding an undercut motif part is an elastic thin blade (103) folded over on itself so as to form, viewed in cross-section, a loop (104).

6. A moulding element (120, 130) according to Claim 4, **characterised in that** the part intended for moulding an undercut motif part is arranged to form a tube (122, 131).

7. A moulding element (120, 130) according to Claim 6, **characterised in that** the tube (122, 131) moulding an undercut motif part is filled with a different material from the material forming said tube, said filling material having an elasticity modulus at most equal to 50% of the modulus of the material forming the tube.

8. A moulding element (120, 130) according to Claim 6, **characterised in that** the tube (122, 131) moulding an undercut motif part is connected to a device for supplying a filling fluid under pressure, emptying means possibly being provided to permit demoulding, the fluid being eliminated from the tube by the pressure forces exerted by the moulded elastomeric material.

9. A moulding element (120, 130) according to any one of Claims 6 to 8, **characterised in that** the tube (122, 131) moulding an undercut motif part is reinforced by a reinforcement material to limit the deformation resulting from the elongation of the material forming the tube.

10. A part of a mould having a moulding surface for moulding part of a tread, said mould part comprising at least one moulding element protruding from the moulding surface of the mould for moulding a motif in the thickness of the tread, said moulding element being **characterised in that** part at least of said moulding element is mounted to pivot on said mould part about a pivot pin parallel to the moulding surface in the moulding position to permit rotation of said part of the moulding element during demoulding and **in that** said moulding element comprises at least one moulding configuration.

11. A part of a mould having a moulding surface for moulding part of a tread, said mould part comprising at least one moulding element according to any one of Claims 1 to 9, this moulding element protruding from the moulding surface of the mould for moulding a motif in the thickness of the tread.
